# EUROPÄISCHE PATENTSCHRIFT

(11) **EP 1 470 337 B1**
(45) Veröffentlichungstag und Bekanntmachung des Hinweises auf die Patenterteilung: **30.03.2005**
(21) Anmeldenummer: 04705787.2
(22) Anmeldetag: 28.01.2004
(51) Int. Cl.: F15B 15/06, F16J 15/54

(54) **SCHWENK- ODER DREHVORRICHTUNG**
PIVOTING OR ROTATING DEVICE
DISPOSITIF DE PIVOTEMENT OU DE ROTATION

(30) Priorität: 29.01.2003 DE 10303333
(43) Veröffentlichungstag der Anmeldung: 27.10.2004
(73) Patentinhaber: Schunk GmbH & Co KG Fabrik für Spann- und Greifwerkzeuge, 74348 Lauffen am Neckar (DE)
(72) Erfinder: HOCH, Andreas, 74388 Talheim (DE); DIETZ, Tobias, 74336 Brackenheim (DE); SCHUSTER, Andreas, 71543 Wüstenrot (DE)
(74) Vertreter: Bulling, Alexander, Dr.
(86) Internationale Anmeldenummer: PCT/EP2004/000735
(87) Internationale Veröffentlichungsnummer: WO 2004/067970

(56) Entgegenhaltungen:
- EP-A- 1 061 266
- EP-A- 1 061 267
- EP-A- 1 150 018
- WO-A-00/42337
- DE-A- 3 005 863
- DE-A- 3 306 480
- DE-C- 4 337 815
- DE-C- 19 519 939

## Beschreibung

Die Erfindung betrifft eine Schwenk- oder Drehvorrichtung mit einem Grundteil und mit einem verschwenkbar am Grundteil angeordneten Schwenkteil, mit einem Medienkanal am Grundteil und einem Medienkanal am Schwenkteil, wobei die beiden Medienkanäle zur Übertragung von Medien miteinander verbunden sind. Bei den Schwenk- oder Drehvorrichtungen kann es sich um sogenannte Drehdurchführungen handeln. Eine derartige Vorrichtung ist aus der Druckschrift DE-A- 195 19939 bekannt.

Eine derartige Schwenkverbindung ist beispielsweise aus der DE 33 06 480 C2 bekannt geworden. Zur Übertragung der Medien vom Grundteil zum Schwenkteil weist hierbei das Schwenkteil wenigstens drei Ringnuten auf, wobei die beiden äußeren. Ringnuten jeweils eine Ringdichtung umfassen und die mittlere Nut mit einerseits dem schwenkteilseitigen Medienkanal und andererseits dem grundteilseitigen Medienkanal korrespondiert. Andere, bekannte Schwenkvorrichtungen sehen die Ringnuten nicht schwenkteilseitig, sondern grundteilseitig vor. Dazu sind dann am Grundteil entsprechende Nuten mit entsprechenden Dichtungen vorzusehen.

Die Montage der bekannten Schwenk- oder Drehvorrichtungen ist vergleichsweise aufwändig, da die einzelnen Ringdichtungen in die dafür vorgesehenen Ringnuten einzusetzen sind. Außerdem sind die Fertigungstoleranzen relativ gering, die durch eine entsprechende Dimensionierung der Dichtungsringe auszugleichen sind. Hierdurch ergeben sich relativ hohe Vorspannungen, die zu einem hohen Verlustdrehmoment beim Schwenken des Schwenkteils führen. Ein weiterer Nachteil der bekannten Schwenk- oder Drehvorrichtungen ist, dass die Abdichtung der Verbindungsstelle der beiden Medienkanäle aufgrund des Vorsehens der beiden Nuten mit Ringdichtungen in Axialrichtung relativ hoch baut.

Der vorliegenden Erfindung liegt deshalb die Aufgabe zugrunde, eine Schwenk- oder Drehvorrichtung der eingangs beschriebenen Art bereitzustellen, die den genannten Nachteilen abhilft. Insbesondere soll die erfindungsgemäße Schwenk- oder Drehvorrichtung einfach und prozesssicher montierbar sein.

Diese Aufgabe wird durch eine Schwenk- oder Drehvorrichtung der eingangs beschriebenen Art erfindungsgemäß dadurch gelöst, dass zwischen einem kreiszylindrischen Teilabschnitt des Grundteils und einem mit diesem Teilabschnitt korrespondierenden, kreiszylindrischen Teilabschnitt des Schwenkteils eine Kammerdichtung angeordnet ist, die wenigstens eine Verbindungskammer zur Verbindung der beiden Medienkanäle aufweist. Die beiden kreiszylindrischen Teilabschnitte verlaufen hierbei vorzugsweise um die Schwenkachse, wobei die Kammerdichtung zwischen den beiden Teilabschnitten vorgesehen ist. Die Kammerdichtung, die ringund/oder hülsenartig ausgebildet sein kann, liegt folglich zwischen den jeweiligen Kanälen.

Die Erfindung hat insbesondere den Vorteil, dass auf eine Vielzahl von Ringnuten am Schwenkteil und/oder am Grundteil zur Unterbringung von einzelnen Dichtelementen verzichtet werden kann. Die erfindungsgemäße Kammerdichtung bewirkt zum einen eine Abdichtung zwischen den beiden zueinander verschwenkbaren Teilen und zum anderen eine Verbindung der beiden Medienkanäle über die Verbindungskammer. Die Kammerdichtung kann hierbei an dem Grundteil oder dem Verschwenkteil drehfest angeordnet sein, so dass eine Relativbewegung beim Verschwenken des Schwenkteils zwischen dem Schwenkteil und der Kammerdichtung oder zwischen der Kammerdichtung und dem Grundteil erfolgt.

Vorteilhafterweise kann vorgesehen sein, dass die Kammerdichtung als Mehrkammerdichtung ausgebildet ist, die mehrere, nicht miteinander verbundene Kammern zur Verbindung mehrerer, an dem Grundteil und dem Schwenkteil vorhandener Kanäle aufweist. Durch Vorsehen einer Mehrkammerdichtung kann insbesondere bei mehreren Medienkanälen eine in Axialrichtung vergleichsweise geringe Bauhöhe erzielt werden. Anstelle von einer Vielzahl von einzelnen Dichtelementen ist erfindungsgemäß lediglich ein einziges Dichtelement in Form der Mehrkammerdichtung mit den entsprechenden Verbindungskammern vorgesehen.

Eine vorteilhafte Vorrichtung ergibt sich dann, wenn die Kammerdichtung als Verbindungskammer an der radial äußeren und/oder radial inneren Oberfläche wenigstens eine vorzugsweise umlaufende Ringnut und einen sich nach radial .innen und/oder radial außen erstreckenden Verbindungsdurchbruch aufweist. Dabei können einer Ringnut mehrere Verbindungsdurchbrüche zugeordnet werden. Die Nuten können im Querschnitt beispielsweise eckig oder rund ausgebildet sein. Vorzugsweise wird eine Verbindungskammer von zwei Ringnuten, eine radial außen und eine radial innen angeordnete Ringnut, und von mehreren Verbindungsdurchbrüchen, die die Nutgründe der beiden Nuten miteinander verbinden, gebildet. Die Ringnuten können dabei in radialer Richtung gesehen in einer Ebene liegen. Die Ringnuten korrespondieren mit den ihnen zugewandten Öffnungen der Medienkanäle am Grundteil und am Schwenkteil. Anstelle von umlaufenden Ringnuten ist denkbar, Ringnutenabschnitte vorzusehen.

Eine besonders vorteilhafte Ausführungsform zeichnet sich dadurch aus, dass die dem Schwenkteil zugewandte offene Seite der Verbindungskammer zu der dem Grundteil zugewandten offenen Seite der Verbindungskammer im Längsschnitt betrachtet axial versetzt angeordnet ist. Durch eine derartige axiale Versetzung kann die Bauhöhe der Kammerdichtung in radialer Richtung reduziert werden, was zu einem kleineren abzudichtenden Ringspalt zwischen dem Grund- und Schwenkteil führt.

Dabei ist vorteilhaft, wenn die wenigstens eine Verbindungskammer je eine an der radial äußeren und an der radial inneren Oberfläche vorgesehene Ringnut umfasst, wobei die beiden, durch wenigstens einen Verbindungsdurchbruch miteinander verbundenen Ringnuten im Längsschnitt betrachtet axial zueinander versetzt angeordnet sind.

Bei mehreren äußeren Ringnuten und mehreren inneren Ringnuten liegen dann beispielsweise die radial äußeren Ringnuten in den Zwischenräumen der radial inneren Ringnuten. Hierdurch können mehrere parallel geschaltete Medienkanäle auf einfache und sehr platzsparende Art und Weise miteinander verbunden werden.

Bei einer Ausführungsform, bei der die innere beziehungsweise äußere Oberfläche der Kammerdichtung keine Ringnut aufweist, sondern lediglich einen radialen Durchbruch, kann vorgesehen sein, dass die der Kammerdichtung zugewandte Seite des entsprechenden Abschnitts des Grundteils und/oder Schwenkteils wenigstens eine mit dem jeweiligen Verbindungsdurchbruch korrespondierende, ringnutartige Erweiterung aufweist. Eine derartige Erweiterung kann beispielsweise mittels eines Scheibenfräsers realisiert werden, der den Bereich um die Öffnung des entsprechenden Kanals in der Ebene der Verbindungskammer freisticht. Außerdem denkbar ist, eine wenigstens abschnittsweise umlaufende Ringnut vorzusehen. Dadurch wird erreicht, dass die jeweilige Verbindungskammer, die durchaus mehrere, sich in radiale Richtung erstreckende Öffnungen aufweisen kann, stets mit der grundteil- und/oder schwenkteilseitigen Erweiterung in Verbindung steht.

Erfindungsgemäß kann auch vorgesehen sein, dass die Kammerdichtung als Lagermittel zur drehbaren Lagerung des Schwenkteils am Grundteil ausgebildet ist. Hierdurch können gemäß dem bekannten Stand der Technik vorgesehene Lagermittel wenigstens teilweise entfallen.

Um eine Erhöhung der Dichtwirkung der Kammerdichtung zu erreichen, wird erfindungsgemäß vorgeschlagen, die Kammerdichtung unter axialer und/oder radialer Vorspannung zwischen dem Schwenkteil und dem Grundteil anzuordnen. Dabei ist denkbar, Mittel zur Ver-, Ein- und/oder Nachstellung der axialen Vorspannung vorzusehen. Derartige Mittel können beispielsweise Einstellschrauben sein, die die Kammerdichtung in axialer Richtung beaufschlagen. Das Vorsehen von Mitteln zum Verstellen der axialen Vorspannung hat den Vorteil, dass wenn eine Undichtheit der Kammerdichtung festgestellt wird, die beispielsweise durch Verschleiß auftreten kann, die Dichtwirkung durch Nachstellen der Vorspannung erhöht werden kann. Damit einher geht eine längere Betriebsdauer der erfindungsgemäßen Vorrichtung.

Die eingangs genannte Aufgabe wird außerdem durch eine Kammerdichtung, insbesondere eine Mehrkammerdichtung, gelöst, die für eine erfindungsgemäße Schwenk- oder Drehrichtung vorgesehen ist.

Weitere vorteilhafte Einzelheiten und Ausgestaltungen der Erfindung sind der folgenden Beschreibung zu entnehmen, in der die Erfindung anhand der Zeichnung näher beschrieben und erläutert ist.

Es zeigen:
- Figur 1: einen Längsschnitt durch eine erfindungsgemäße Schwenkvorrichtung;
- Figur 2: einen Teilschnitt durch die in der Figur 1 dargestellte Kammerdichtung;
- Figur 3: einen Teilschnitt durch eine zweite Ausführungsform einer erfindungsgemäßen Kammerdichtung; und
- Figur 4: einen Teilschnitt durch eine dritte Ausführungsform einer erfindungsgemäßen Kammerdichtung.

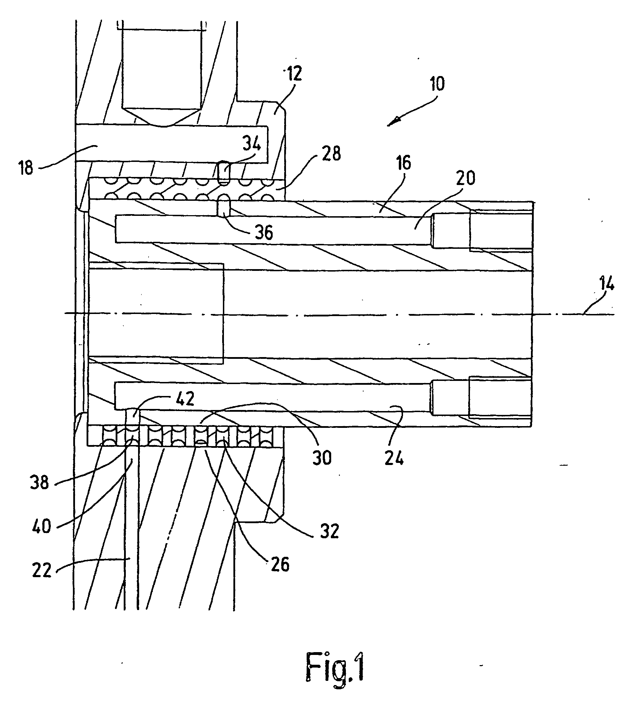

Die in der Figur 1 dargestellte Schwenkvorrichtung 10 umfasst ein Grundteil 12 und ein um eine Schwenkachse 14, am Grundteil 12 schwenkbar angeordnetes Schwenkteil 16. Das Grundteil 12 weist einen ersten Medienkanal 18 auf, der mit einem schwenkteilseitigen Medienkanal 20 verbunden ist. Ein zweiter am Grundteil 12 vorgesehener Medienkanal 22 ist mit einem zweiten am Schwenkteil 16 vorgesehenen Medienkanal 24 verbunden.

Das Grundteil 12 weist einen kreiszylindrischen Teilabschnitt 26 zur Aufnahme einer Mehrkammerdichtung 28 auf. Das Schwenkteil 16 liegt mit einem der Mehrkammerdichtung 28 zugewandten kreiszylindrischen Teilabschnitt 30 an der radial innen liegenden Oberfläche der Mehrkammerdichtung 28 an.

Die Mehrkammerdichtung 28 weist mehrere fluiddicht voneinander getrennte Verbindungskammern auf. Eine Verbindungskammer 32 verbindet die Öffnung 34 des Kanals 18 mit der Öffnung 36 des Kanals 20. Eine andere Verbindungskammer 38 verbindet die Öffnung 40 des Kanals 22 mit der Öffnung 42 des Kanals 24.

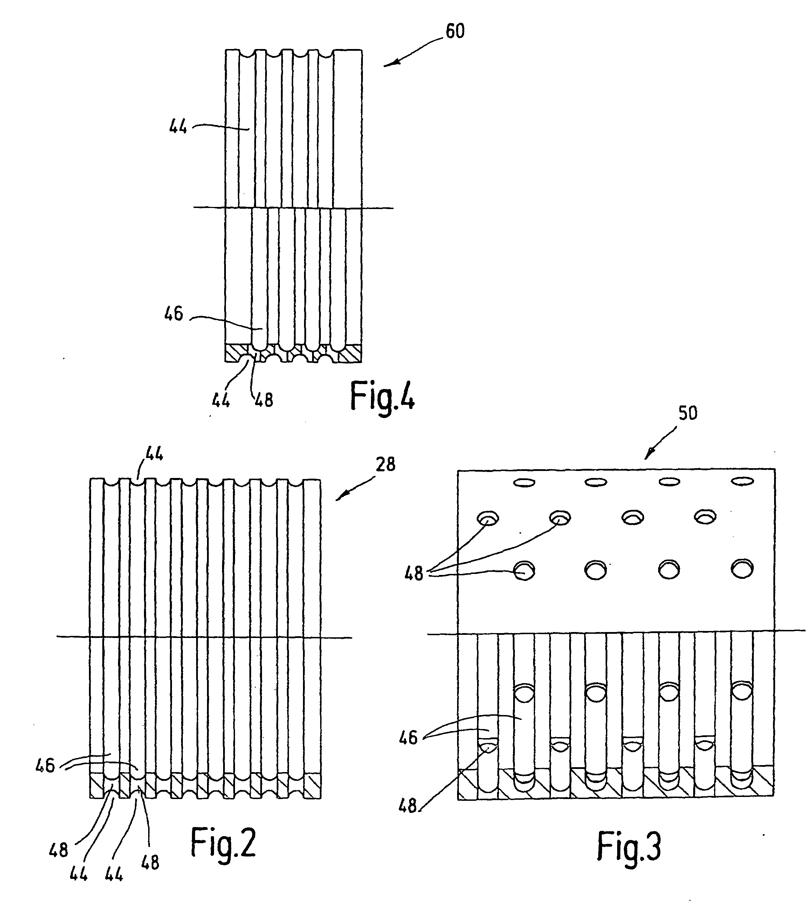

Die in den Figuren 1 und 2 dargestellte Mehrkammerdichtung 28 sieht insgesamt acht Verbindungskammern vor, die jeweils von einer radial außen liegenden Ringnut 44 und einer der Ringnut 44 gegenüberliegenden, radial innen liegenden Ringnut 46 sowie wenigstens einem Verbindungsdurchbruch 48, der die beiden Ringnuten 44, 46 miteinander verbindet, gebildet wird. Die Anzahl der Verbindungskammern der Kammerdichtung hängt von der Anzahl der miteinander zu verbindenden Kanäle ab. Sind lediglich zwei miteinander zu verbindende Kanäle, einer am Grundteil 12 und einer am Schwenkteil 16 vorhanden, so kann eine Kammerdichtung mit lediglich einer Verbindungskammer Verwendung finden.

Die in der Figur 1 dargestellte Schwenkvorrichtung 10 hat den Vorteil, dass sie sehr leicht herstellbar und sehr leicht montierbar ist. Da die der Mehrkammerdichtung 28 zugewandten Teilabschnitte 26 beziehungsweise 30 des Grundteils 12 beziehungsweise Schwenkteils 16 kreiszylindrisch ausgebildet sind, sind sie auf einfache Art und Weise sehr toleranzgenau herstellbar. Aufwändige Nuten für Ringdichtungen, wie sie beim Stand der Technik vorgesehen sind, entfallen. Auch die Montage, die durch Einschieben des Teilabschnitts 30 des Schwenkteils 16 in die am Grundteil 12 vormontierte Mehrkammerdichtung 28 erfolgt, ist auf einfache Art und Weise durchführbar.

Vorteilhafterweise ist die Mehrkammerdichtung 28 so ausgebildet, dass sie unter geringer axialer und/oder radialer Vorspannung zwischen dem Grundteil 12 und dem Schwenkteil 16 angeordnet ist. Dadurch wird verhindert, dass das durch die entsprechenden Kanäle und die Mehrkammerdichtung 28 transportierte Medium an den Schnittstellen zwischen Grundteil 12 beziehungsweise Schwenkteil 16 und der Mehrkammerdichtung 28 austritt.

Vorteilhafterweise können nicht dargestellte Einstellmittel vorgesehen sein, mit denen die Mehrkammerdichtung 28 in axialer Richtung vorgespannt werden kann. Dies hat den Vorteil, dass, wenn im Betrieb der Schwenkvorrichtung eine Leckage festgestellt wird, die Vorspannung über die entsprechenden Mittel nacheingestellt werden kann. Zur Realisierung einer radialen Vorspannung kann die Mehrkammerdichtung 28 in radialer Richtung geringfügig größer ausgebildet sein als der Spalt zwischen dem Grundteil 12 und dem Schwenkteil 16, in dem die Mehrkammerdichtung 28 sitzt.

Je nach Material der dargestellten Mehrkammerdichtung 28 kann diese als Lagermittel zur drehbaren Lagerung des Schwenkteils 16 ausgebildet sein. Hierdurch kann erreicht werden, dass zusätzliche Lagermittel entfallen.

Die in der Figur 3 dargestellte Mehrkammerdichtung 50 unterscheidet sich von der Mehrkammerdichtung 28 gemäß Figur 1 und 2 dadurch, dass sie an ihrer radialen Außenseite keine Rillen aufweist. Rillen 46 sind lediglich an der radialen Innenseite vorgesehen. Die einzelnen Rillen 46 sehen jeweils mehrere Verbindungsdurchbrüche 48 nach radial außen hin vor. Die Mehrkammerdichtung 50 wird vorzugsweise in einer Schwenkeinrichtung verbaut, bei der das Grundteil wenigstens eine wenigstens abschnittsweise konzentrisch um die zugehörige Ringnut 46 verlaufende Ringnut aufweist. Diese wenigstens abschnittsweise am Grundteil verlaufende Ringnut ist so angeordnet, dass stets ein zugehöriger Verbindungsdurchbruch 48 mit dieser grundteilseitigen Ringnut korrespondiert. Denkbar ist, dass mehrere Ringnutabschnitte am Grundteil vorgesehen sind, wobei jeweils wenigstens ein Ringnutabschnitt mit wenigstens einem Verbindungsdurchbruch 48 korrespondiert.

Bei der in der Figur 4 dargestellten Mehrkammerdichtung 60 sind entsprechend der in der Figur 2 dargestellten Mehrkammerdichtung 28 radial außen liegende Ringnuten 44 und radial innen liegende Ringnuten 46 vorgesehen. Die jeweils einander zugehörigen Ringnuten 44 und 46 sind durch einen Verbindungsdurchbruch 48 miteinander verbunden. Im Gegensatz zur Mehrkammerdichtung 28 liegen die Ringnuten 44 und 46 der Mehrkammerdichtung 50 nicht in einer radial verlaufenden Ebene, sondern sind in axialer Richtung versetzt zueinander angeordnet. Eine innere Ringnut 46 liegt zwischen zwei benachbarten äußeren Ringnuten 44. Hierdurch wird erreicht, dass die Mehrkammerdichtung 60 im Vergleich zu der Mehrkammerdichtung 28 und 50 in radialer Richtung kompakter baut.

Bei einer anderen Ausführungsform, die nicht dargestellt ist, ist erfindungsgemäß denkbar, dass die Verbindungskammern von lediglich sich in radialer Richtung erstreckenden Verbindungsdurchbrüchen, ohne Vorsehen von Ringnuten, gebildet sind.

Alle in der Beschreibung, der Zeichnung und den nachfolgenden Ansprüchen beschriebenen Merkmale können sowohl einzeln, als auch in beliebiger Kombination miteinander erfindungswesentlich sein.

## Patentansprüche

1. Schwenk- oder Drehvorrichtung (10) mit einem Grundteil (12) und mit einem verschwenkbar am Grundteil (10) angeordneten Schwenkteil (16), mit einem Medienkanal (18, 22) am Grundteil (12) und einem Medienkanal (20, 24) am Schwenkteil (16), wobei die beiden Medienkanäle (18, 20, oder 22, 24) zur Übertragung von Medien miteinander verbunden sind, **dadurch gekennzeichnet, dass** zwischen einem kreiszylindrischen Teilabschnitt (26) des Grundteils (12) und einem mit diesem Teilabschnitt korrespondierenden kreiszylindrischen Teilabschnitt (30) des Schwenkteils (16) eine Kammerdichtung (28, 50, 60) angeordnet ist, die wenigstens eine Verbindungskammer (32) zur Verbindung der beiden Medienkanäle (18, 20 oder 22, 24) aufweist.

2. Vorrichtung (10) nach Anspruch 1, **dadurch gekennzeichnet, dass** die Kammerdichtung (28, 50, 60) als Mehrkammerdichtung ausgebildet ist, die mehrere nicht miteinander verbundene Verbindungskammern (32) zur Verbindung mehrerer an dem Grundteil (12) und dem Schwenkteil (16) vorhandener Kanäle (18, 20, 22, 24) aufweist.

3. Vorrichtung (10) nach Anspruch 1 oder 2, **dadurch gekennzeichnet, dass** die Kammerdichtung (28, 50, 60) als Verbindungskammer an der radial äußeren und/oder radial inneren Oberfläche wenigstens eine Ringnut (44, 46) und einen sich nach radial innen und/oder radial außen erstreckenden Verbindungsdurchbruch (48) aufweist.

4. Vorrichtung (10) nach Anspruch 1, 2 oder 3, **dadurch gekennzeichnet, dass** die dem Schwenkteil (16) zugewandte offene Seite der Verbindungskammer (32) zu der dem Grundteil (12) zugewandten offnen Seite der Verbindungskammer (32) im Längsschnitt betrachtet axial versetzt angeordnet ist.

5. Vorrichtung (10) nach einem der vorhergehenden Ansprüche, **dadurch gekennzeichnet, dass** die wenigstens eine Verbindungskammer (32) je eine an der radial äußeren und an der radial inneren Oberfläche vorgesehene Ringnut (44, 46) umfasst, wobei die beiden, durch wenigstens einen Verbindungsdurchbruch (48) miteinander verbundenen Ringnuten (44, 46) im Längsschnitt betrachtet axial zueinander versetzt angeordnet sind.

6. Vorrichtung (10) nach einem der vorhergehenden Ansprüche, **dadurch gekennzeichnet, dass** die der Kammerdichtung (28, 50, 60) zugewandte Seite des Teilabschnitts (26, 30) des Grundteils (12) und/oder des Schwenkteils (16) eine Erweiterung aufweist.

7. Vorrichtung (10) nach einem der vorhergehenden Ansprüche, **dadurch gekennzeichnet, dass** die Kammerdichtung (28, 50, 60) als Lagermittel zur drehbaren Lagerung des Schwenkteils (14) ausgebildet ist.

8. Vorrichtung (10) nach einem der vorhergehenden Ansprüche, **dadurch gekennzeichnet, dass** die Kammerdichtung (28, 50, 60) unter axialer und/oder radialer Vorspannung zwischen dem Schwenkteil (16) und dem Grundteil (12) angeordnet ist.

9. Vorrichtung (10) nach Anspruch 8, **dadurch gekennzeichnet, dass** Mittel zur Ver-, Ein- und/oder Nachstellung der axialen Vorspannung der Kammerdichtung (28, 50, 60) vorgesehen sind.

10. Kammerdichtung (28, 50, 60), insbesondere Mehrkammerdichtung, für eine Schwenk- oder Drehvorrichtung (10) nach einem der vorhergehenden Ansprüche.

## Claims

1. Pivoting or rotating device (10) comprising a base part (12) and comprising a pivoting part (16) arranged pivotably on the base part (12), comprising a medium channel (18, 22) on the base part (12) and a medium channel (20, 24) on the pivoting part (16), the two medium channels (18, 20, or 22, 24) being connected to one another for transferring media, **characterized in that** a chamber seal (28, 50, 60) which has at least one connecting chamber (32) for connection of the two medium channels (18, 20, or 22, 24) is arranged between a cylindrical section (26) of the base part (12) and a cylindrical section (30) of the pivoting part (16), which section corresponds with said section (26).

2. Device (10) according to Claim 1, **characterized in that** the chamber seal (28, 50, 60) is in the form of a multichamber seal which has a plurality of connecting chambers (32) not connected to one another and intended for connecting a plurality of channels (18, 20, 22, 24) present on the base part (12) and on the pivoting part (16).

3. Device (10) according to Claim 1 or 2, **characterized in that** the chamber seal (28, 50, 60) has, as a connecting chamber on the radially outer and/or radially inner surface, at least one annular groove (44, 46) and a connecting passage (48) extending radially inwards and/or radially outwards.

4. Device (10) according to Claim 1, 2 or 3, **characterized in that**, when viewed in longitudinal section, that open side of the connecting chamber (32) which faces the pivoting part (16) is arranged axially offset relative to that open side of the connecting chamber (32) which faces the base part (12).

5. Device (10) according to any of the preceding Claims, **characterized in that** the at least one connecting chamber (32) comprises one annular groove (44, 46) each provided on the radially outer and the radially inner surface, the two annular grooves (44, 46) connected to one another by at least one connecting passage (48) being arranged axially offset relative to one another when viewed in longitudinal section.

6. Device (10) according to any of the preceding Claims, **characterized in that** that side of the section (26, 30) of the base part (12) and/or of the pivoting part (16) which faces the chamber seal (28, 50, 60) has an extension.

7. Device (10) according to any of the preceding Claims, **characterized in that** the chamber seal (28, 50, 60) is in the form of a bearing means for rotatably mounting the pivoting part (14).

8. Device (10) according to any of the preceding Claims, **characterized in that** the chamber seal (28, 50, 60) is arranged, with axial and/or radial prestress, between the pivoting part (16) and the base part (12).

9. Device (10) according to Claim 8, **characterized in that** means for adjusting, setting and/or resetting the axial prestress of the chamber seal (28, 50, 60) are provided.

10. Chamber seal (28, 50, 60), in particular multichamber seal, for a pivoting or rotating device (10) according to any of the preceding Claims.

## Revendications

1. Dispositif de pivotement ou de rotation (10), comportant une pièce de base (12) et une pièce de pivotement (16) qui est disposée avec possibilité de pivotement sur la pièce de pivotement (16), un canal de milieux (18, 22) qui est disposé sur la pièce de base (12) et un canal de milieux (20, 24) qui est disposé sur la pièce de pivotement (16), les deux canaux de milieux (18, 20 ou 22, 24) étant reliés entre eux pour la transmission de milieux, **caractérisé en ce que,** entre une section partielle de forme cylindrique circulaire (26) de la pièce de base (12) et une section partielle de forme cylindrique circulaire (30) correspondante de la pièce de pivotement (16) est disposé un dispositif d'étanchéité de chambre (28, 50, 60) qui comporte au moins une chambre de liaison (32) pour réaliser la liaison entre les deux canaux de milieux (18, 20 ou 22, 24).

2. Dispositif (10) selon la revendication 1, **caractérisé en ce que** le dispositif d'étanchéité de chambre (28, 50, 60) est réalisé sous la forme d'un dispositif d'étanchéité de chambre multiple qui comporte plusieurs chambres de liaison (32) qui ne sont pas reliées entre elles pour réaliser la liaison entre plusieurs canaux (18, 20, 22, 24) se trouvant sur la pièce de base (12) et la pièce de pivotement (16).

3. Dispositif (10) selon la revendication 1 ou 2, **caractérisé en ce que** le dispositif d'étanchéité de chambre (28, 50, 60) comporte, en tant que chambre de liaison, sur la surface extérieure radiale et/ou intérieure radiale, au moins une rainure annulaire (44, 46) et une traversée de liaison (48) qui s'étend radialement vers l'intérieur et/ou radialement vers l'extérieur.

4. Dispositif (10) selon l'une quelconque des revendications 1, 2 ou 3, **caractérisé en ce que** la face ouverte de la chambre de liaison (32) qui est dirigée vers la pièce de pivotement (16) est disposée avec un décalage axial, selon une vue en coupe longitudinale, par rapport à la face ouverte de la chambre de liaison (32) qui est dirigée vers la pièce de base (12).

5. Dispositif (10) selon l'une quelconque des revendications précédentes, **caractérisé en ce que** la au moins une chambre de liaison (32) comprend, à chaque fois, une rainure annulaire (44, 46) qui est prévue sur la surface extérieure radiale et/ou intérieure radiale, les deux rainures annulaires (44, 46), qui sont reliées entre elles au moyen d'au moins une traversée de liaison (48), étant disposées avec un décalage axial, selon une vue en coupe longitudinale.

6. Dispositif (10) selon l'une quelconque des revendications précédentes, **caractérisé en ce que** la face de la section partielle (26, 30) de la pièce de base (12) et/ou de la pièce de pivotement (16), qui est dirigée vers le dispositif d'étanchéité de chambre (28, 50, 60), comporte un élargissement.

7. Dispositif (10) selon l'une quelconque des revendications précédentes, **caractérisé en ce que** le dispositif d'étanchéité de chambre (28, 50, 60) est réalisé sous la forme d'éléments de palier destinés à la réception avec possibilité de rotation de la pièce de pivotement (16).

8. Dispositif (10) selon l'une quelconque des revendications précédentes, **caractérisé en ce que** le dispositif d'étanchéité de chambre (28, 50, 60) est disposé, sous une précontrainte axiale et/ou radiale, entre la pièce de pivotement (16) et la pièce de base (12).

9. Dispositif (10) selon la revendication 8, **caractérisé en ce que** l'on prévoit des moyens pour le réglage, l'ajustage et le réajustage de la précontrainte axiale du dispositif d'étanchéité de chambre (28, 50, 60).

10. Dispositif d'étanchéité de chambre (28, 50, 60), en particulier dispositif d'étanchéité de chambre multiple, destiné à un dispositif de pivotement ou de rotation (10) selon l'une quelconque des revendications précédentes.
